# EUROPEAN PATENT APPLICATION

(11) **EP 4 564 828 A1**
(43) Date of publication of application: **04.06.2025**
(21) Application number: 24773978.2
(22) Date of filing: 13.03.2024
(51) Int. Cl.: H04N 21/431

(54) **VIDEO CALL METHOD AND APPARATUS, ELECTRONIC DEVICE, AND STORAGE MEDIUM**

(30) Priority: 20.03.2023 CN 202310275058
(71) Applicant: DOUYIN VISION CO., LTD., Beijing 100041 (CN)
(72) Inventor: YANG, Zhiming, Beijing 100028 (CN); WU, Xuanshu, Beijing 100028 (CN); FU, Yuhao, Beijing 100028 (CN); WANG, Wei, Beijing 100028 (CN)
(74) Representative: Williams, Michael David
(86) International application number: PCT/CN2024/081403
(87) International publication number: WO 2024/193412

(57) **Abstract**

Embodiments of the present disclosure provide a video call method and apparatus, an electronic device, and a storage medium. The method includes: playing, in response to a first operation on a target interaction page, a standard video and a user video through the target interaction page, where the first operation is an operation of triggering a video interaction, the user video is an interactive video associated with the standard video, and the target interaction page is a page for displaying interaction content; and generating an effect animation according to an action matching degree between the user video and the standard video, and displaying the effect animation through the target interaction page.

## Description

### CROSS-REFERENCE TO RELATED APPLICATION(S)

The present application claims priority to Chinese Patent Application No. 202310275058.6, entitled "VIDEO CALL METHOD AND APPARATUS, ELECTRONIC DEVICE, AND STORAGE MEDIUM", filed with the China National Intellectual Property Administration on March 20, 2023, which is incorporated by reference in its entirety.

### FIELD

Embodiments of the present disclosure relate to the computer technology, and in particular, to a video call method and apparatus, an electronic device, and a storage medium.

### BACKGROUND

A video call is a real-time communication service that can allow users to establish multimedia groups on the network. Through instant messaging software, the users can conveniently and quickly implement the video call.

Currently, interaction methods for the users in the video call process are relatively limited, which typically include audio and video methods, resulting in a lack of interactivity and enjoyment in the existing video call process.

### SUMMARY

Embodiments of the present disclosure provide a video call method and apparatus, an electronic device, and a storage medium, which may improve interactivity and enjoyment in a video call process.

In a first aspect, embodiments of the present disclosure provide a video call method, including:
playing, in response to a first operation on a target interaction page, a standard video and a user video through the target interaction page, where the first operation is an operation of triggering a video interaction, the user video is an interactive video associated with the standard video, and the target interaction page is a page for displaying interaction content; and
generating an effect animation according to an action matching degree between the user video and the standard video, and displaying the effect animation through the target interaction page.

In a second aspect, embodiments of the present disclosure further provide a video call apparatus. The apparatus includes:
a video playback module, configured to play, in response to a first operation on a target interaction page, a standard video and a user video through the target interaction page, wherein the first operation is an operation of triggering a video interaction, the user video is an interactive video associated with the standard video, and the target interaction page is a page for displaying interaction content; and
an effect generation module, configured to generate an effect animation according to an action matching degree between the user video and the standard video, and displaying the effect animation through the target interaction page.

In a third aspect, embodiments of the present disclosure further provide an electronic device. The electronic device includes:
one or more processors; and
a storage, configured to store one or more programs,
where the one or more programs, when executed by the one or more processors, cause the one or more processors to implement the video call method according to the embodiments of the present disclosure.

In a fourth aspect, embodiments of the present disclosure further provide a computer-readable storage medium, having a computer program stored therein. The program, when executed by a processor, implements the video call method according to the embodiments of the present disclosure.

### BRIEF DESCRIPTION OF THE DRAWINGS

The above and other features, advantages, and aspects of various embodiments of the present disclosure will become more apparent with reference to the accompanying drawings and the following specific implementations. Throughout the accompanying drawings, the same or similar reference numerals denote the same or similar elements. It should be understood that the accompanying drawings are illustrative, and components and elements may not necessarily be drawn to scale.
FIG. 1 is a schematic flowchart of a video call method according to embodiments of the present disclosure;
FIG. 2 is a schematic diagram of a target interaction page according to embodiments of the present disclosure;
FIG. 3 is a schematic diagram of a video upload page according to embodiments of the present disclosure;
FIG. 4 is a schematic diagram of another target interaction page according to embodiments of the present disclosure;
FIG. 5 is a schematic diagram of yet another target interaction page according to embodiments of the present disclosure;
FIG. 6 is a schematic flowchart of another video call method according to embodiments of the present disclosure;
FIG. 7 is a schematic diagram of a connection page for a local device and a mobile terminal according to embodiments of the present disclosure;
FIG. 8 is a schematic diagram of another connection page for a local device and a mobile terminal according to embodiments of the present disclosure;
FIG. 9 is a schematic diagram of a video interaction system according to embodiments of the present disclosure;
FIG. 10 is a schematic diagram of yet another target interaction page according to embodiments of the present disclosure;
FIG. 11 is a schematic flowchart of yet another video call method according to embodiments of the present disclosure;
FIG. 12 is a schematic diagram of pose extraction according to embodiments of the present disclosure;
FIG. 13 is a schematic diagram of implementing an interactive game in a video call process according to embodiments of the present disclosure;
FIG. 14 is a schematic diagram of a pop-up according to embodiments of the present disclosure;
FIG. 15 is a schematic diagram of a structure of a video call apparatus according to embodiments of the present disclosure; and
FIG. 16 is a block diagram of a structure of an electronic device according to embodiments of the present disclosure.

### DETAILED DESCRIPTION OF EMBODIMENTS

The embodiments of the present disclosure will be described in more detail below with reference to the accompanying drawings. Although the accompanying drawings show some embodiments of the present disclosure, it should be understood that the present disclosure may be implemented in various forms, and should not be construed as being limited to the embodiments stated herein. On the contrary, these embodiments are provided for a more thorough and complete understanding of the present disclosure. It should be understood that the accompanying drawings and the embodiments of the present disclosure are for exemplary purposes only, and are not intended to limit the scope of protection of the present disclosure.

It should be understood that the steps recorded in the method implementations of the present disclosure may be performed in different orders and/or in parallel. In addition, additional steps may be included and/or the execution of the illustrated steps may be omitted in the method implementations. The scope of the present disclosure is not limited in this aspect.

The term "including" used herein and variations thereof are open-ended inclusions, namely "including but not limited to". The term "based on" is interpreted as "at least partially based on". The term "an embodiment" means "at least one embodiment"; the term "another embodiment" means "at least one additional embodiment"; and the term "some embodiments" means "at least some embodiments". Related definitions of other terms will be given in the description below.

It should be noted that concepts such as "first" and "second" mentioned in the present disclosure are only used to distinguish different apparatuses, modules, or units, and are not used to limit the order or relation of interdependence of functions performed by these apparatuses, modules, or units.

It should be noted that the modifiers "one" and "a plurality of' mentioned in the present disclosure are illustrative and not limiting, and those skilled in the art should understand that unless otherwise explicitly specified in the context, the modifiers should be understood as "one or more".

The names of messages or information exchanged between a plurality of apparatuses in the implementations of the present disclosure are used for illustrative purposes only, and are not used to limit the scope of these messages or information.

It should be understood that before the use of the technical solutions disclosed in the embodiments of the present disclosure, a user shall be informed of the type, range of use, use scenarios, etc., of personal information involved in the present disclosure in an appropriate manner in accordance with relevant laws and regulations, and the authorization of the user shall be obtained.

For example, in response to reception of an active request from the user, a prompt message is sent to the user to clearly inform the user that a requested operation will require access to and use of the personal information of the user. As such, the user can independently choose, according to the prompt message, whether to provide the personal information to software or hardware, such as an electronic device, an application, a server, or a storage medium, that performs the operations of the technical solutions of the present disclosure.

As an optional but non-limiting implementation, in response to the reception of the active request from the user, the method for sending the prompt message to the user may be, for example, a pop-up, in which the prompt message may be presented in text. Further, the pop-up may also carry a selection control for the user to choose whether to "agree" or "disagree" to provide the personal information to the electronic device.

It should be understood that the above notification and user authorization obtaining process is only illustrative, which does not limit the implementations of the present disclosure, and other methods that comply with the relevant laws and regulations may also be applied to the implementations of the present disclosure.

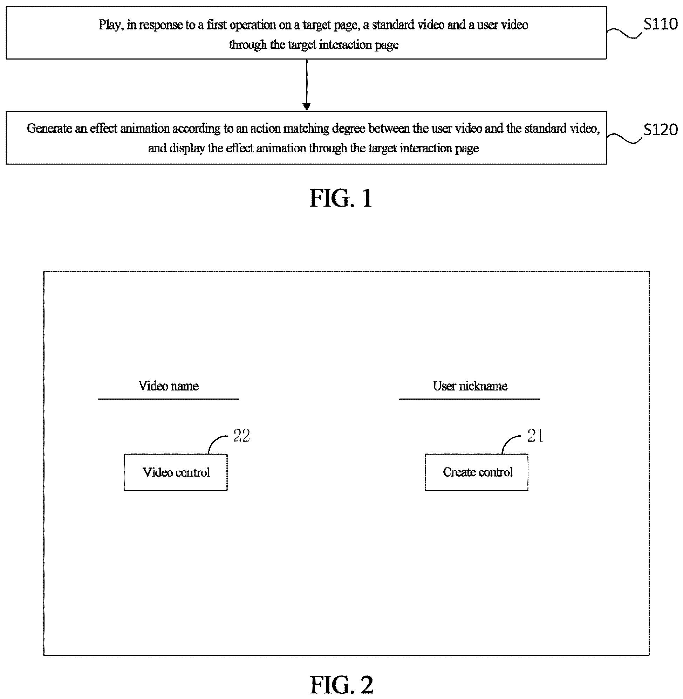

FIG. 1 is a schematic flowchart of a video call method according to embodiments of the present disclosure. The method may be performed by a video call apparatus. The apparatus may be implemented by software and/or hardware, and may be configured in an electronic device. Typically, the electronic device may include a computer terminal, such as a personal computer and a notebook computer. The video call method according to these embodiments of the present disclosure is used in a scenario of video call. As shown in FIG. 1, the video call method according to these embodiments may include the following steps:
S110: In response to a first operation on a target page, a standard video and a user video are played through the target interaction page.

According to these embodiments of the present disclosure, the first operation is an operation of triggering a video interaction. For example, the first operation may be an operation that an interaction event initiator notifies an invitee to start a game through a service end. Specifically, the first operation may be an operation that the interaction event initiator taps a start control on the target interaction page. Alternatively, the first operation may be a user operation on the target interaction page. Alternatively, the first operation may also be a countdown operation after all participants in the video call are ready.

The target interaction page may be a page for displaying interaction content. For example, by inputting a set website in a browser, the target interaction page is displayed, and the target interaction page includes a control for starting an interactive game. The target interaction page further includes a first area, a second area, a third area, and a fourth area, where the first area displays the standard video, the second area displays the user video, and the third area and the fourth area are areas for displaying effect animations. In some embodiments, the first area may be named a standard video area, the second area may be named a user video area, and the third area and the fourth area may be named effect animation areas.

For example, the target interaction page may be a page for displaying a video call screen when the interaction event initiator has a video call with the invitee (hereinafter referred to as the other user). The interaction event initiator may be a user of an electronic device that initiates an interactive action. Correspondingly, the other user may be a user having the video call with the interaction event initiator. The video call may be a video call in any scenario, such as a two-person video call (e.g., a scenario where the interaction event initiator has a real-time video connection with one other user in a closed room) or a multi-person video call (e.g., a scenario where the interaction event initiator has a real-time video connection with two or more other users in a closed room). The closed room is a room created by the interaction event initiator through instant messaging software for a game interaction. The interaction event initiator may invite the other user to enter the closed room through a method for sending invitation information.

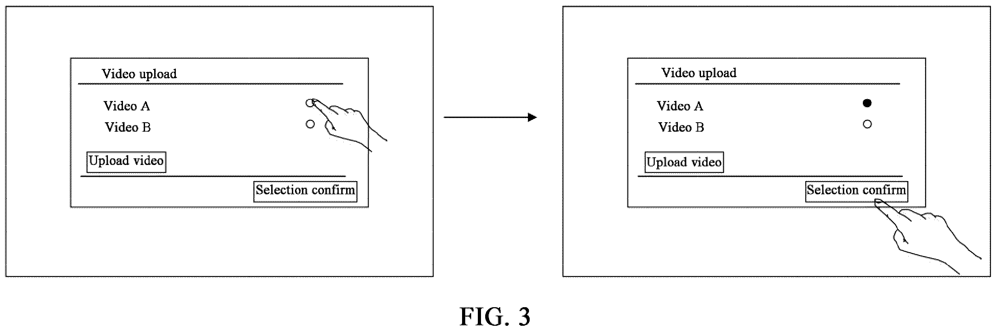

FIG. 2 is a schematic diagram of a target interaction page according to embodiments of the present disclosure. As shown in FIG. 2, the target interaction page may include a create control 21 and a video control 22. In response to a sixth operation on the create control 21 by the interaction event initiator, a video call group is created according to user identifications in a creation operation. The video control 22 may also be displayed through the target interaction page, and in response to a fourth operation on the video control 22 by the interaction event initiator, a video upload page is displayed. In response to a fifth operation on the video upload page, the standard video is uploaded to the service end. FIG. 3 is a schematic diagram of a video upload page according to embodiments of the present disclosure. As shown in FIG. 3, all uploaded standard videos are displayed through the video upload page. According to a seventh operation on the standard video on the video upload page by the interaction event initiator, the standard video displayed on the target interaction page is determined. The service end analyzes the standard video and generates a correspondence table between time and preset poses.

In some embodiments, after detecting that the other users enter the closed room in response to an invitation from the interaction event initiator, the service end sends an access address of the standard video to all users related to the video call, so that the standard video is displayed through the target interaction page of each user.

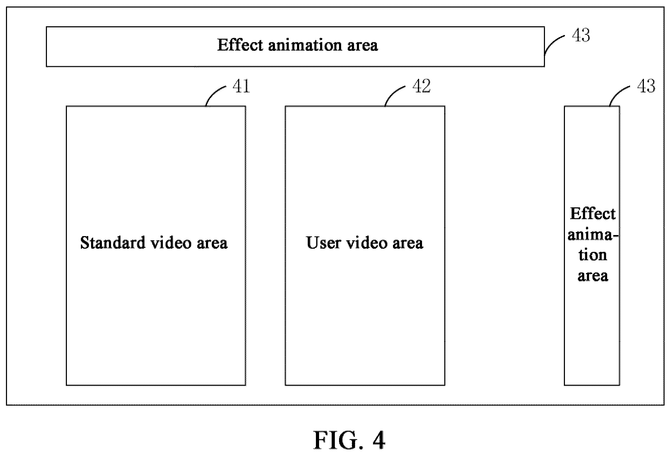

FIG. 4 is a schematic diagram of another target interaction page according to embodiments of the present disclosure. As shown in FIG. 4, the target interaction page in these embodiments of the present disclosure includes a standard video area 41, a user video area 42, and an effect animation area 43.

The standard video is a video selected by the interaction event initiator that has been uploaded to the service end. For example, the standard video may be a dance video, a fitness video, or other videos containing body movements. The user video is an interactive video associated with the standard video. For example, the user video is a video in which each user correspondingly acts by imitating actions in the standard video. Alternatively, the user video may also be a video in which each user performs pre-agreed actions according to the actions in the standard video.

In some implementations, the step of playing, in response to a first operation on a target page, a standard video and a user video through a target interaction page includes: acquiring the first operation on the target interaction page, and acquiring the standard video and the user video according to the first operation. For example, the first operation on the target interaction page is acquired; an interaction start message is generated according to the first operation and sent to the service end; and a video stream of the standard video sent by the service end is acquired. An acquisition message is generated according to the first operation, and the acquisition message is sent to a video acquisition device; and a video stream of the user video sent by the video acquisition device is acquired. The standard video is played through the first area on the target interaction page, and the user video is played through the second area on the target interaction page. For example, the video stream is played through the standard video area, and the video stream of the user video is played through the user video area. The video acquisition device may be a mobile terminal camera, a fixed camera, or another device with wide-angle and high-pixel characteristics to compensate for the limitations of a computer terminal without a camera, a narrow viewing angle range of a built-in camera that cannot capture a full-body shot, and low pixel quality.

In some embodiments, the first operation of the interaction event initiator on the target interaction page is acquired, the interaction start message is generated according to the first operation, and the interaction start message is sent to the service end. The service end sends the video stream of the standard video to the target interaction page of each user according to the interaction start message. The video stream is played through the standard video area on the target interaction page. An electronic device of each user generates an acquisition message according to the first operation, sends the acquisition message to the mobile terminal camera, and collects the user video in real time through the mobile terminal camera. The video stream of the user video sent by the mobile terminal camera is acquired, and is played through the user video area on the target interaction page.

It should be noted that a mobile terminal and the electronic device are located in the same local area network. Before the step of playing, in response to a first operation on a target page, a standard video and a user video through a target interaction page, establishing a wireless connection between the mobile terminal and the electronic device is further included.

S120: An effect animation is generated according to an action matching degree between the user video and the standard video, and the effect animation is displayed through the target interaction page.

The action matching degree may be the similarity between a user pose and a preset pose in the standard video. The user video is analyzed through a body pose extraction algorithm to obtain key skeleton nodes, and the user pose is determined according to the key skeleton nodes.

The effect animation may be an animation display form of effect information generated by the service end according to the action matching degree. For example, the effect information includes effect symbols, and the effect symbols may be set to represent the action matching degree of a local user for various preset poses.

In some embodiments, the step of generating an effect animation according to an action matching degree between the user video and the standard video includes: acquiring, in response to playing a preset pose in the standard video, at least one video frame associated with the preset pose in the user video; matching a user pose in the at least one video frame with the preset pose, and determining the action matching degree according to a matching result; and sending the action matching degree to a service end, acquiring effect information determined by the service end according to the action matching degree, and generating the effect animation according to the effect information.

In some embodiments, acquiring, in response to playing the preset pose in the standard video, at least one video frame associated with the preset pose in the user video includes: determining the preset pose being played in the standard video according to playback time of the standard video; and acquiring a timestamp of a user pose in the user video corresponding to the preset pose, determining a timestamp interval according to the timestamp, and acquiring at least one video frame corresponding to the timestamp interval in the user video.

Specifically, the service end sends the correspondence table between the time and the preset poses to the electronic device of each user participating in the interaction. The electronic device detects the preset pose of the standard video according to the correspondence table and acquires N video frames before and after the video frame associated with the preset pose in the user video. The value of N is a default value or is configured according to an application scenario. Since the user pose may span a plurality of video frames or there may be a problem about the video quality, by analyzing the N video frames around the preset pose in the user video, a complete and clear user pose may be obtained.

Further, matching the user pose in the at least one video frame with the preset pose, and determining the action matching degree according to the matching result includes: acquiring a first skeleton node corresponding to the user pose in each video frame; matching a second skeleton node corresponding to the preset pose with the first skeleton node to obtain a similarity between the user pose in each video frame and the preset pose; and determining the action matching degree according to the similarity..

The electronic device analyzes the N video frames by using the body pose extraction algorithm to obtain a key skeleton node corresponding to each video frame, and determines a user pose according to the key skeleton nodes. For each video frame, the action matching degree of the corresponding video frame is obtained by matching the similarity between the second skeleton node of the preset pose and the first skeleton node of the user pose. For example, node vectors of the key skeleton nodes in each video frame such as the upper arm, the forearm, the thigh, and the calf are acquired, vector distances between key skeleton nodes of the preset pose such as the upper arm, the forearm, the thigh, and the calf and the key skeleton nodes of the corresponding video frame such as the upper arm, the forearm, the thigh, and the calf are calculated, and the action matching degree of each video frame is determined according to the vector distances. The action matching degree corresponding to the preset pose is determined according to the action matching degrees of the video frames corresponding to the preset pose, and the action matching degree corresponding to the current preset pose is sent to the service end. The service end determines the effect information according to the action matching degree of the current preset pose. The electronic device acquires the effect information that is determined by the service end and corresponds to each preset pose, and generates the effect animation according to the effect information corresponding to each preset pose.

It should be noted that there are many methods for the service end to determine effect information according to an action matching degree, which are not specifically limited. For example, the service end allocates, according to the action matching degree, the effect symbols to the user in a decreasing order manner. Specifically, for the current preset pose, the service end ranks the users in descending order according to the action matching degree and allocates the effect symbols to the users in a decreasing quantity, so that after the game ends, the final ranking of the users may be determined according to the number of the effect symbols corresponding to each preset pose for each user.

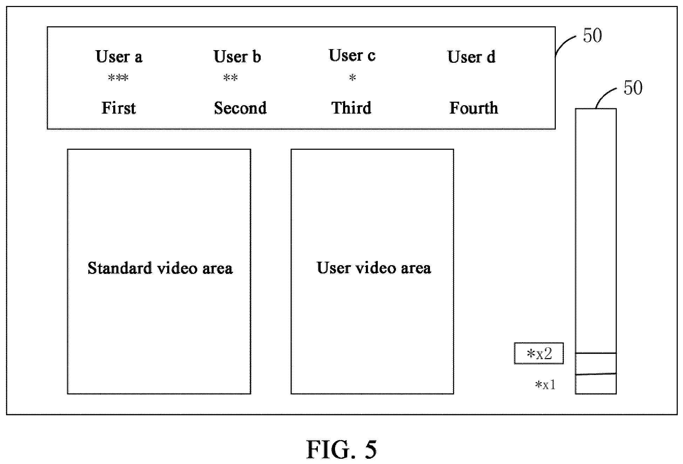

In some embodiments, the step of displaying the effect animation through the target interaction page includes: displaying the effect animation through the effect animation area on the target interaction page. FIG. 5 is a schematic diagram of another target interaction page according to embodiments of the present disclosure. As shown in FIG. 5, an effect animation is displayed in an effect animation area 50 on the target interaction page. The effect animation area 50 includes a third area and a fourth area which are separated, where a first effect animation is displayed in the third area, and a second effect animation is displayed in the fourth area.

According to the video call method according to these embodiments of the present disclosure, the standard video and the user video are played through the target interaction page in response to the first operation on the target interaction page, the effect animation is generated according to the action matching degree between the user video and the standard video, and the effect animation is displayed through the target interaction page, thereby performing the user interactive game in the video call process. A game result is displayed through the effect animation, thereby improving interactivity and enjoyment in the video call process.

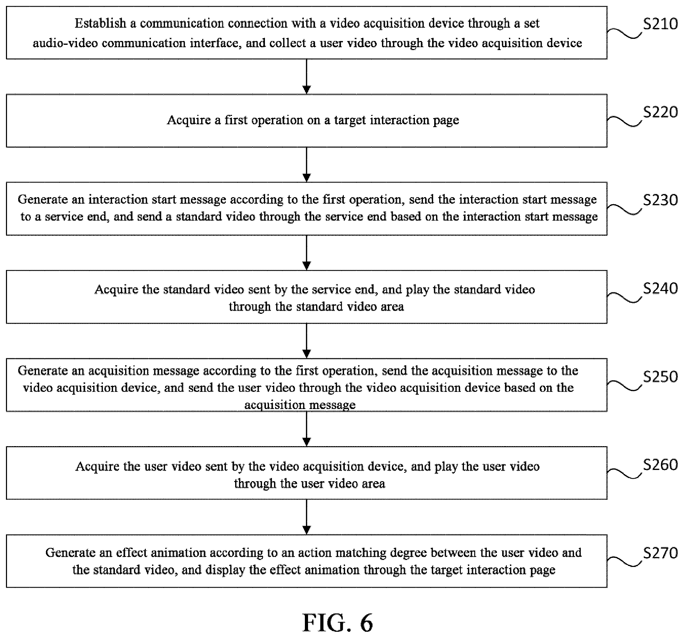

FIG. 6 is a schematic flowchart of another video call method according to embodiments of the present disclosure. Based on the above embodiments, these embodiments include an additional step of connecting the video acquisition device to the electronic device after displaying the target interaction interface. As shown in FIG. 6, the method includes the following steps:
S210: A communication connection with the video acquisition device is established through a set audio-video communication interface, and the user video is collected through the video acquisition device.

The set audio-video communication interface is configured to achieve a point-to-point communication connection between the electronic device and the video acquisition device, thereby exchanging media resources and network information between the electronic device and the video acquisition device.

After the communication connection between the video acquisition device and the electronic device is established, a video of the user imitating actions in a standard video is acquired by the video acquisition device and pushed to the electronic device in real time, and the video pushed by the video acquisition device is displayed through the electronic device.

In some embodiments, the target interaction page is displayed, where the target interaction page includes the standard video area, the user video area, and the effect animation area. In response to a second operation on the user video area, a connection guide page is displayed.

The second operation may be an operation that the user triggers the establishment of a wireless connection between a local device and the video acquisition device and acquires access authorization for the video acquisition device. For example, for an interaction event initiator, the second operation may be an operation that the interaction event initiator taps a preset connection control in the user video area of the local device. Correspondingly, for the other user of the video call (i.e., the invitee), the second operation may be an operation that the invitee taps the preset connection control in the user video area of the local device. In these embodiments of the present disclosure, the local device may be an electronic device such as a personal computer or a notebook computer.

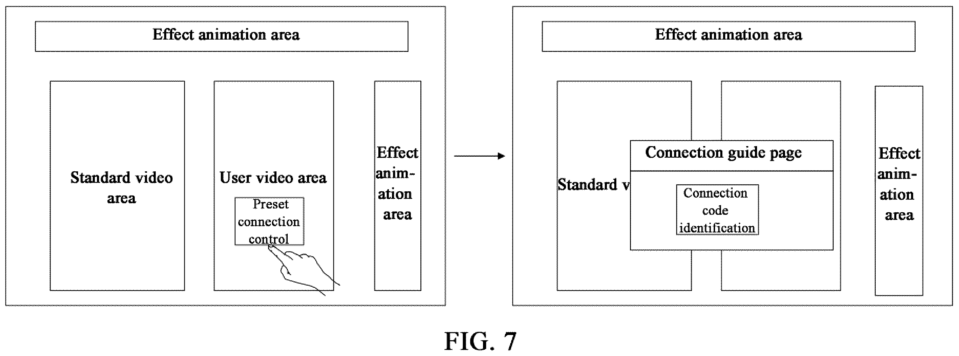

FIG. 7 is a schematic diagram of a connection page for a local device and a mobile terminal according to embodiments of the present disclosure. A target interaction page shown in FIG. 7 is displayed on the local device, and a preset connection control is displayed in a user video area. In a case that the user taps the preset connection control, a connection guide page is displayed.

In some embodiments, a connection identification is displayed through the connection guide page, and the mobile terminal performs connection authentication according to the connection identification. In a case that authentication is successful, a wireless connection between the electronic device and the mobile terminal is established. For example, a connection code identification is displayed through the connection guide page, and a mobile terminal camera scans the connection code identification. The mobile terminal displays an authorization page based on the connection code identification, and authorizes, in response to an authorization operation of the user on the authorization page, the electronic device to access a mobile device camera.

After displaying the guide page, an access authorization for the mobile terminal camera is acquired based on a third operation on the connection guide page.

The third operation may be an operation that the user establishes the wireless connection between the local device and the mobile terminal and acquires the access authorization for the mobile terminal camera. For example, for the interaction event initiator, the third operation may be an operation that the interaction event initiator scans the connection guide page of the local device through the mobile terminal camera. Correspondingly, for the invitee, the third operation may be an operation that the invitee scans the connection guide page of the local device through the mobile terminal camera.

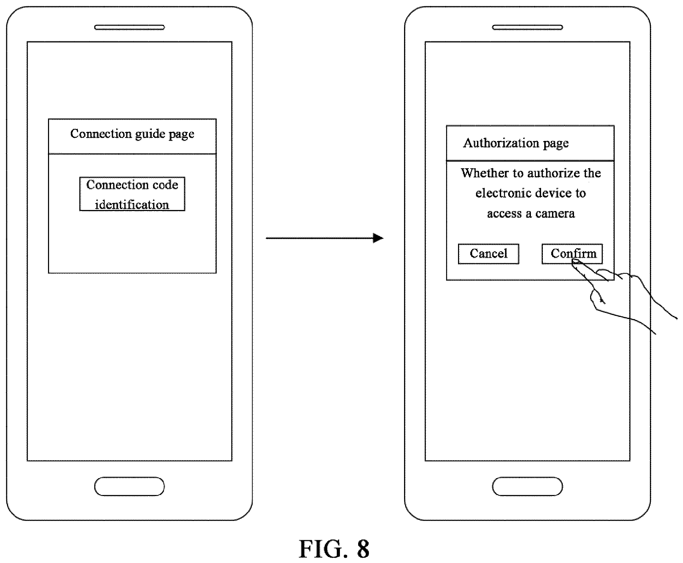

FIG. 8 is a schematic diagram of another connection page for a local device and a mobile terminal according to embodiments of the present disclosure. After a mobile terminal camera is activated, a connection code identification on a connection guide page is acquired, an authorization page is displayed based on the connection code identification, and in response to an authorization operation of the user on the authorization page, an electronic device is authorized to access the mobile device camera.

For example, the mobile terminal acquires the connection code identification on the connection guide page through the camera, the authorization page is displayed in a manner of a pop-up, and the user is asked whether to authorize the electronic device to access the camera through the authorization page. In a case of detecting an approval operation, an access authorization message for the mobile terminal camera is sent to the electronic device, so that the electronic device acquires the access authorization for the mobile terminal camera.

It should be noted that compared with a camera of a computer, the mobile terminal camera has a wider camera viewing angle and a higher pixel count, and therefore a solution that ultra-low latency transmission of a set communication protocol in a local area network is used to achieve mobile terminal camera shooting and synchronization to the computer may be adopted. To implement the above solution, it is first ensured that the mobile terminal and the computer terminal are under the same local area network, and a real-time message function of the set communication protocol is used to exchange media and network information between the mobile terminal and the computer terminal and establish a peer to peer (P2P) connection. The mobile terminal collects user videos and pushes a video stream to the computer terminal, and the computer terminal displays the video stream pushed by the mobile terminal.

S220: A first operation on the target interaction page is acquired.

S230: An interaction start message is generated according to the first operation, the interaction start message is sent to a service end, and the standard video is sent through the service end based on the interaction start message.

S240: the standard video sent by the service end is acquired, and the standard video is played through the standard video area.

In some embodiments, in response to a synchronization event being triggered, a playback progress of the standard video and a user status are sent to the service end in real time through a set audio-video software development kit (SDK). The service end synchronizes the playback progress and the user status to the target interaction page of each user.

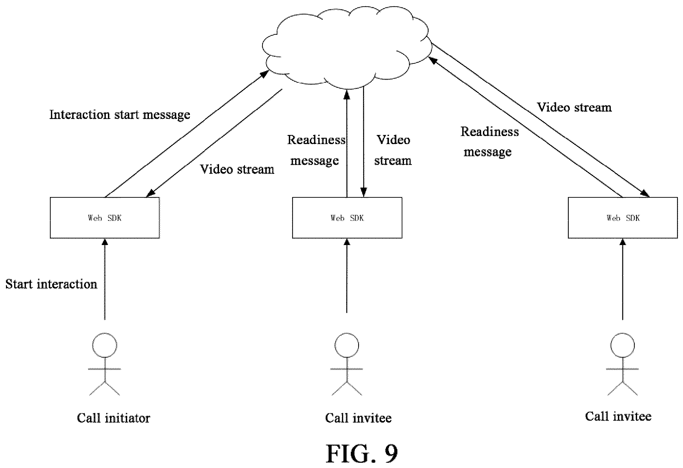

The synchronization event may be an event that triggers the synchronization of the video playback progress and the user status on the target interaction pages of each user. The synchronization event may be triggered periodically, and the like. The set audio-video SDK is used to achieve a multi-person video call. For example, the set audio-video SDK may be a set Web SDK. At the computer terminal, a multi-person video interaction based on a browser page is achieved through the set Web SDK. FIG. 9 is a schematic diagram of a video interaction system according to embodiments of the present disclosure. As shown in FIG. 9, an interaction event initiator invites two invitees for an interactive game. After the invitees enter a room, readiness messages are sent to a service end through a set Web SDK. After receiving the readiness message from one invitee, the service end sends a status change message to computer terminals of users participating in the interactive game. The status of the corresponding invitee on a target interaction page is changed to a ready status according to the status change message. In a case that the status of the two invitees is the ready status, the interaction event initiator taps a game start control and sends an interaction start message to the service end through the set Web SDK. The service end pushes a video stream of a standard video to all users relevant to a video call, so that the video stream is played through a standard video area on the target interaction page at the computer terminal of each user, thereby achieving synchronization of a standard video playback progress.

S250: An acquisition message is generated according to the first operation, the acquisition message is sent to the video acquisition device, and the user video is sent through the video acquisition device based on the acquisition message.

S260: The user video sent by the video acquisition device is acquired, and the user video is played through the user video area.

In some embodiments, a computer of the interaction event initiator generates the acquisition message according to the first operation, and sends the acquisition message to the video acquisition device. The service end sends a trigger message to computers of all call invitees according to the first operation. Computers of the invitees generate acquisition messages according to the trigger message corresponding to the first operation, and send the acquisition messages to the video acquisition device.

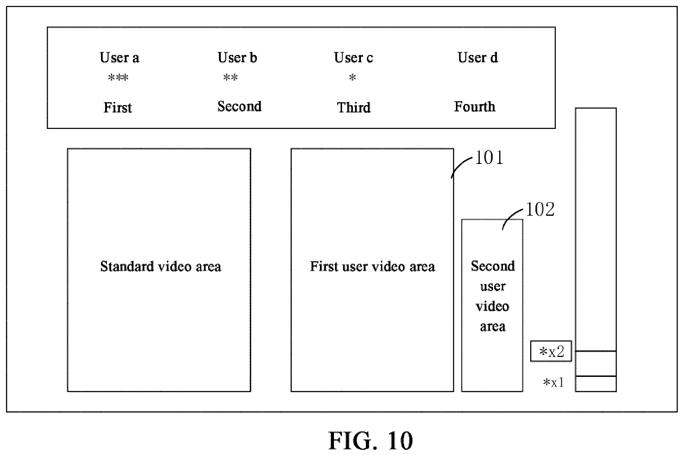

FIG. 10 is a schematic diagram of another target interaction page according to embodiments of the present disclosure. The video acquisition device collects the user video in real time according to the acquisition message. As shown in FIG. 10, an own user video is played through a first user video area 101 of a local terminal and is sent to the service end, so that the service end synchronizes the own user video to another user, thereby playing the own user video in a second user video area 102 of the another user, and achieving real-time synchronization of a game status.

S270: An effect animation is generated according to an action matching degree between the user video and a standard video, and the effect animation is displayed through the target interaction page.

According to these embodiments of the present disclosure, the wireless connection between the video acquisition device and the computer terminal is established through the third operation on the connection guide page, the computer terminal acquires the access authorization for the video acquisition device, and the user video collected by the video acquisition device is acquired in real time, thereby solving the problem about the camera of the computer terminal in aspects of the camera viewing angle and the pixel count, widening the camera viewing angle, and enhancing the video shooting quality.

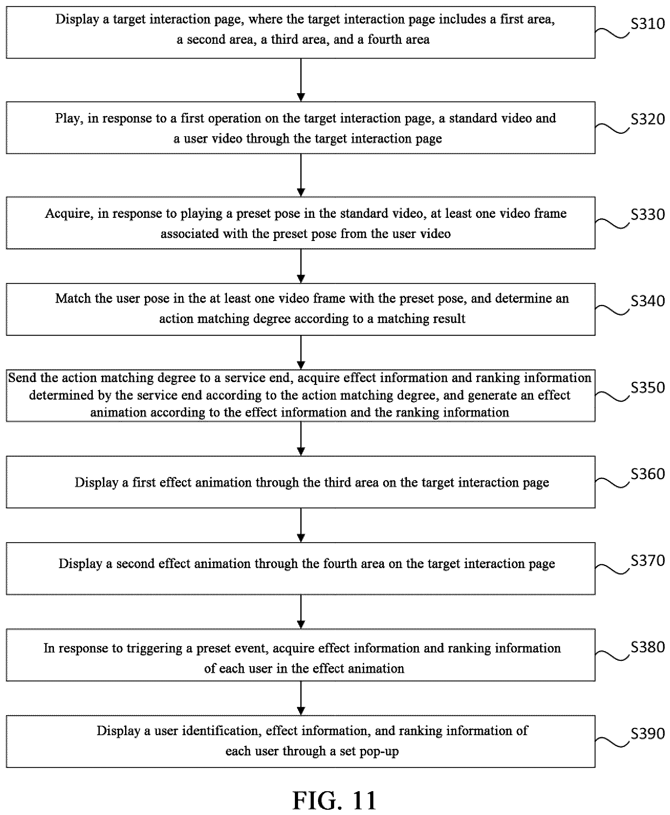

FIG. 11 is a schematic flowchart of another video call method according to embodiments of the present disclosure. Based on the above embodiments, these embodiments specifically defines a method for generating an effect animation. As shown in FIG. 11, the method includes the following steps:
S310: A target interaction page is displayed, where the target interaction page includes a first area, a second area, a third area, and a fourth area.
S320: In response to a first operation on the target interaction page, a standard video and a user video are played through the target interaction page.
S330: In response to playing a preset pose from the standard video, at least one video frame associated with the preset pose in the user video is acquired.

The preset pose is a pose in a correspondence table between time and preset poses that is generated by a service end. One standard video includes at least one preset pose. When each preset pose from the standard video is played, action matching degree calculation is performed, and an effect animation is generated according to an action matching degree.

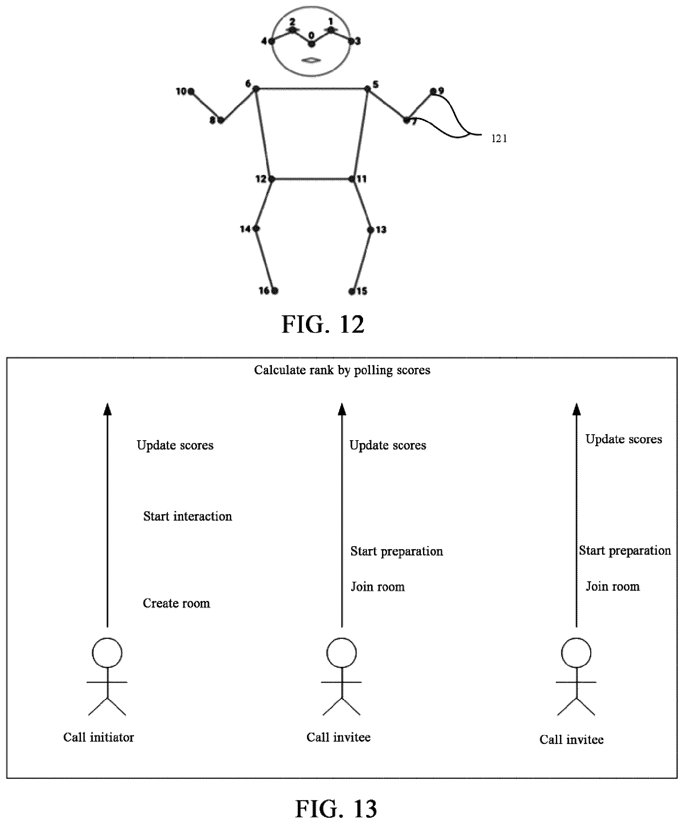

According to these embodiments of the present disclosure, the at least one video frame associated with the preset pose may be N video frames before and after a video frame associated with a user pose corresponding to the preset pose. Since the frame containing the user pose may span a plurality of video frames or there may be a problem about the shooting quality, by performing pose extraction on the N video frames around the user pose, key skeleton nodes corresponding to the video frames may be obtained. FIG. 12 is a schematic diagram of pose extraction according to embodiments of the present disclosure. FIG. 12 illustrates key skeleton nodes 121 corresponding to all video frames. A user pose corresponding to each of N video frames is determined according to the key skeleton nodes 121.

S340: the user pose in the at least one video frame is mapped with the preset pose, and an action matching degree is determined according to a matching result.

Exemplarily, first skeleton nodes corresponding to the user pose in each video frame are acquired; and second skeleton nodes corresponding to the preset pose and the first skeleton nodes are matched to obtain similarity between the user pose in each video frame and the preset pose. The action matching degree is determined according to the similarity. The first skeleton nodes in the user pose and the second skeleton nodes in the standard video may be extracted through a set pose extraction algorithm.

According to these embodiments of the present disclosure, matching the user pose in the at least one video frame with the preset pose may involve calculating a vector difference between the skeleton nodes of the user pose and the preset pose, and determining the similarity between the user pose in each video frame and the preset pose according to the vector difference. The similarity corresponding to the most similar video frame may be selected as the action matching degree of the user for the preset pose.

In a case of playing each preset pose from the standard video, the action matching degree between the user pose and the preset pose is calculated through the above process.

S350: The action matching degree is sent to the service end, effect information and ranking information determined by the service end according to the action matching degree is acquired, and an effect animation is generated according to the effect information and the ranking information.

The effect information may be information that is displayed on the target interaction page using an effect method. For example, the effect information includes effect symbols, effect graphics, etc. The ranking information may be ranking information of the user action matching degree. Both the effect information and the ranking information are generated by the service end based on the action matching degree corresponding to each preset pose, and are sent to users.

In some embodiments, a computer terminal of each user sends an action matching degree corresponding to each preset pose to the service end, and the service end ranks the users in descending order according to the action matching degree, determines effect symbols corresponding to the users in a decreasing quantity manner according to a ranking result, and determines effect graphics corresponding to the users according to the effect symbols. For each user, the service end determines effect information according to the effect symbols of all the users and the effect graphics of the corresponding users, and sends the effect information to the computer terminals of the corresponding users. The service end also sends ranking information of all the users to the computer terminals of the corresponding users according to the ranking result.

The step of generating an effect animation according to the effect information and the ranking information includes: for each preset pose, generating a first effect animation according to the effect information and the ranking information of each user, and generating a second effect animation according to effect information of a local user.

The first effect animation may be an animation displayed in a first effect animation area of the target interaction page. The first effect animation may include information such as user identifications, the number of effect symbols, and user rankings. The second effect animation may be an animation displayed in a second effect animation area of the target interaction page. The second effect animation may include the number of effect symbols of the local user and effect graphics determined according to the effect symbols.

S360: The first effect animation is displayed through the third area on the target interaction page.

S370: The second effect animation is displayed through the fourth area on the target interaction page.

Before the interaction starts, user nicknames and user statuses are displayed in the first effect animation area. After the interaction starts, the first effect animation area is updated to display the user nicknames, the effect symbols, and the ranking information. As shown in FIG. 5, in the interaction process, the effect symbols and the ranking information are dynamically updated as the standard video plays. In the interaction process, the effect graphics are displayed in the second effect animation area. For example, the effect graphics may be graphics for dynamically displaying effect symbol changes, such as a progress bar that grows with the number of effect symbols.

S380: In response to a preset event being triggered, effect information and ranking information of each user in the effect animation are acquired.

The preset event may be an event indicating the end of the interaction. For example, the preset event may be a set time after the standard video playback is complete. Within the set time, the computer terminal acquires effect information and ranking information determined by the service end according to the last preset pose, where the last preset pose is determined based on the time in the correspondence table between the time and the preset poses. Alternatively, the preset event may also be an event that updates the effect animation according to the effect information and the ranking information corresponding to the last preset pose.

In some embodiments, in response to the event indicating the end of the interaction being triggered, the effect information and the ranking information of each user in the updated effect animation are acquired. In the interaction process, the service end determines the number of effect symbols according to the action matching degree and accumulates the number with the number of effect symbols corresponding to the previous preset pose to determine the number of effect symbols corresponding to a current preset pose, and then determines ranking information corresponding to the current preset pose according to the number of the effect symbols. Therefore, the number of effect symbols corresponding to the last preset pose is the number of effect symbols for an interactive game, and the ranking information corresponding to the last preset pose is ranking information for the interactive game.

FIG. 13 is a schematic diagram of implementing an interactive game in a video call process according to embodiments of the present disclosure. As shown in FIG. 13, for each standard video, a closed room is created. An interaction event initiator creates the closed room, and invites invitees to enter the room. After detecting a readiness message sent by the invitee, a service end sends a ready status to a computer terminal of each user. The interaction event initiator sends an interaction start message to the service end, thereby allowing the service end to notify the invitee to start the interaction. In the interaction process, the service end polls action matching degrees of the users in the room, determines effect information and ranking information according to the action matching degrees, and sends the effect information and the ranking information to the computer terminals. The computer terminals update an effect animation according to the effect information and the ranking information.

S390: Display a user identification, effect information, and ranking information of each user through a set pop-up.

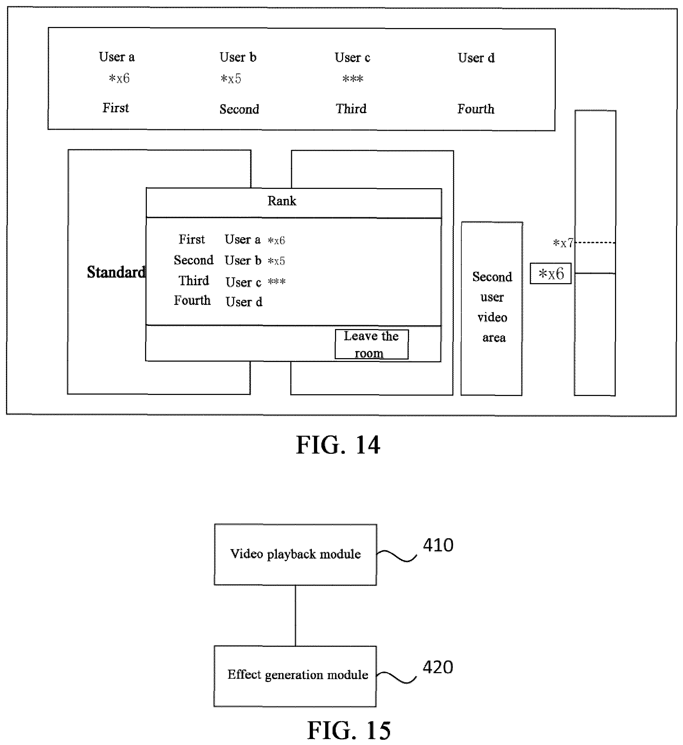

FIG. 14 is a schematic diagram of a pop-up according to embodiments of the present disclosure. As shown in FIG. 14, at the end of the interaction, the set pop-up is displayed, which is located on an upper layer of the target interaction page. The user nicknames of the users, the number of the effect symbols, and the ranking information are displayed through the set pop-up.

According to these embodiments of the present disclosure, for each preset pose, the action matching degree is determined by comparing the user pose with the preset pose, the effect information and the ranking information are determined according to the action matching degree, the effect animation is determined according to the effect information and the ranking information, and the effect animation is displayed through the effect animation area, thereby representing user scores and ranking through the effect animation, and further enhancing the fun.

FIG. 15 is a schematic diagram of a structure of a video call apparatus according to embodiments of the present disclosure. The apparatus may be implemented by software and/or hardware, and may be configured in an electronic device. Typically, the electronic device may include a computer terminal, such as a personal computer and a notebook computer. As shown in FIG. 15, the video call apparatus according to these embodiments may include: a video playback module 410 and an effect generation module 420.

The video playback module 410 is configured to play, in response to a first operation on a target interaction page, a standard video and a user video through the target interaction page, wherein the first operation is an operation of triggering a video interaction, the user video is an interactive video associated with the standard video, and the target interaction page is a page for displaying interaction content.

The effect generation module 420 is configured to generate an effect animation according to an action matching degree between the user video and the standard video, and display the effect animation through the target interaction page.

According to the video call apparatus according to these embodiments of the present disclosure, the standard video and the user video are played through the target interaction page in response to the first operation on the target page, the effect animation is generated according to the action matching degree between the user video and the standard video, and the effect animation is displayed through the target interaction page, thereby performing a user interactive game in the video call process. A game result is displayed through the effect animation, thereby improving interactivity and enjoyment in the video call process.

In the above solution, the video playback module 410 is specifically configured to:
acquire the first operation on the target interaction page, and acquire the standard video and the user video according to the first operation; and
play the standard video through a first area on the target interaction page, and play the user video through a second area on the target interaction page.

In the above solution, the effect generation module 420 is specifically configured to:
acquire, in response to playing a preset pose in the standard video, at least one video frame associated with the preset pose in the user video;
match a user pose in the at least one video frame with the preset pose, and determine the action matching degree according to a matching result; and
send the action matching degree to a service end, acquire effect information determined by the service end according to the action matching degree, and generate the effect animation according to the effect information.

Further, the effect generation module 420 is specifically further configured to:
determine the preset pose being played in the standard video according to playback time of the standard video; and
acquire a timestamp of a user pose in the user video corresponding to the preset pose, determine a timestamp interval according to the timestamp, and acquire at least one video frame corresponding to the timestamp interval in the user video.

Further, the effect generation module 420 is specifically further configured to:
acquire a first skeleton node corresponding to the user pose in each video frame;
match a second skeleton node corresponding to the preset pose with the first skeleton node to obtain a similarity between the user pose in each video frame and the preset pose; and
determine the action matching degree according to the similarity.

Further, the apparatus further includes:
an information acquiring module, configured to acquire ranking information determined by the service end according to the action matching degree after sending the action matching degree to the service end.

The effect generation module 420 is specifically further configured to:
generating the effect animation according to the effect information and the ranking information.

Further, the effect generation module 420 is specifically further configured to:
generate, for each preset pose, a first effect animation according to the effect information and the ranking information of each user, and generate a second effect animation according to the effect information of a local user.

Further, the effect generation module 420 is specifically further configured to:
display the first effect animation through a third area on the target interaction page; and
display the second effect animation through a fourth area on the target interaction page.

In the above solution, the apparatus further includes:
a connection establishment module, configured to establish a communication connection with a video acquisition device through a set audio-video communication interface, and collect the user video through the video acquisition device before playing, in response to a first operation on a target page, a standard video and a user video through the target interaction page.

The above solution further includes:
a status synchronization module, configured to send a playback progress of the standard video and a user status to a service end through a set audio-video software development kit (SDK), and synchronize the playback progress and the user status to the target interaction page of each user through the service end.

Optionally, the apparatus further includes:
an upload page display module, configured to display a video control through the target interaction page before responding to the first operation on the target interaction page, and display, in response to a fourth operation on the video control, a video upload page; and
a video upload module, configured to upload, in response to a fifth operation on the video upload page, the standard video to the service end.

In the above solution, the solution further includes:
an information display module, configured to acquire, in response to a preset event being triggered, effect information and ranking information of each user in the effect animation; and display a user identification, the effect information, and the ranking information of each user through a set pop-up.

The video call apparatus according to these embodiments of the present disclosure may perform the video call method according to any embodiment of the present disclosure, and has the corresponding functional modules and beneficial effects for performing the video call method. For technical details that are not detailed in these embodiments, reference may be made to the video call method according to any embodiment of the present disclosure.

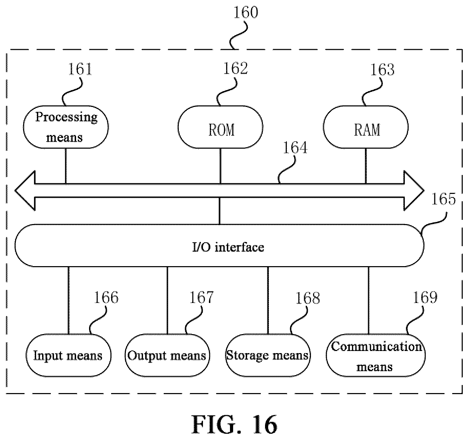

FIG. 16 is a block diagram of a structure of an electronic device according to embodiments of the present disclosure. Reference is made to FIG. 16 below, which is a schematic diagram of a structure of an electronic device 160 suitable for implementing embodiments of the present disclosure. The electronic device in these embodiments of the present disclosure may include smart terminals such as a desktop computer, a notebook computer, and a digital TV. Mobile terminals include, for example, a mobile phone and a portable Android device (PAD). The electronic device shown in FIG. 16 is merely an example, and should not impose any limitation on the function and scope of use of the embodiments of the present disclosure.

As shown in FIG. 16, the electronic device 160 may include a processing means (e.g., a central processing unit and a graphics processing unit) 161 that may perform a variety of appropriate actions and processing according to a program stored in a read-only memory (ROM) 162 or a program loaded from a storage means 166 into a random access memory (RAM) 163. The RAM 163 further stores various programs and data required for the operation of the electronic device 160. The processing means 161, the ROM 162, and the RAM 163 are connected to one another through a bus 164. An input/output (I/O) interface 165 is also connected to the bus 164.

Typically, the following apparatuses may be connected to the I/O interface 165: an input means 166 including, for example, a touch screen, a touch pad, a keyboard, a mouse, a camera, a microphone, an accelerometer, and a gyroscope; an output means 167 including, for example, a liquid crystal display (LCD), a speaker, and a vibrator; the storage means 166 including, for example, a magnetic tape and a hard drive; and a communication means 169. The communication means 169 may allow the electronic device 160 to be in wireless or wired communication with other devices for data exchange. Although FIG. 16 shows the electronic device 160 having various apparatuses, it should be understood that it is not required to implement or have all of the shown apparatuses. It may be an alternative to implement or have more or fewer apparatuses.

In particular, the above process described with reference to the flowcharts according to the embodiments of the present disclosure may be implemented as a computer software program. For example, embodiments of the present disclosure include a computer program product, which includes a computer program carried on a non-transitory computer-readable medium, where the computer program includes program code for performing the method shown in the flowchart. In these embodiments, the computer program may be downloaded and installed from the network through the communication means 169, installed from the storage means 166, or installed from the ROM 162. The computer program, when executed by the processing means 161, performs the above functions limited in the method in these embodiments of the present disclosure.

It should be noted that the above computer-readable medium in the present disclosure may be either a computer-readable signal medium or a computer-readable storage medium, or any combination of the two. The computer-readable storage medium may be, for example, but is not limited to, electric, magnetic, optical, electromagnetic, infrared, or semiconductor systems, apparatuses, or devices, or any combination of the above. More specific examples of the computer-readable storage medium may include, but are not limited to: an electrical connection with one or more wires, a portable computer disk, a hard drive, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above. In the present disclosure, the computer-readable storage medium may be any tangible medium including or storing a program, and the program may be for use by or for use in combination with an instruction execution system, apparatus, or device. However, in the present disclosure, the computer-readable signal medium may include a data signal propagated in a baseband or as a part of a carrier, where the data signal carries computer-readable program code. The propagated data signal may take various forms, including but not limited to an electromagnetic signal, an optical signal, or any suitable combination of the above. The computer-readable signal medium may further be any computer-readable medium other than the computer-readable storage medium. The computer-readable signal medium may send, propagate, or transmit a program for use by or for use in combination with the instruction execution system, apparatus, or device. The program code included in the computer-readable medium may be transmitted by any suitable medium, including but not limited to a wire, an optical cable, radio frequency (RF), etc., or any suitable combination of the above.

In some implementations, a client and a server may communicate using any currently known or future-developed network protocols such as a hypertext transfer protocol (HTTP), and may be interconnected with digital data communication in any form or medium (e.g., a communication network). Examples of the communication network include a local area network ("LAN"), a wide area network ("WAN"), an internetwork (e.g., the Internet), a peer-to-peer network (e.g., an ad hoc peer-to-peer network), and any currently known or future-developed network.

The above computer-readable medium may be included in the above electronic device; or may also separately exist without being assembled in the electronic device.

The above computer-readable medium carries one or more programs. The above one or more programs, when executed by the electronic device, cause the electronic device to:
play, in response to a first operation on a target interaction page, a standard video and a user video through the target interaction page, where the first operation is an operation of triggering a video interaction, the user video is an interactive video associated with the standard video, and the target interaction page is a page for displaying interaction content; and
generate an effect animation according to an action matching degree between the user video and the standard video, and display the effect animation through the target interaction page.

Computer program code for performing operations of the present disclosure may be written in one or more programming languages or a combination thereof, where the above programming languages include, but are not limited to, object-oriented programming languages, such as Java, Smalltalk, and C++, and further include conventional procedural programming languages, such as "C" language or similar programming languages. The program code may be executed entirely on a user computer, partly on the user computer, as a stand-alone software package, partly on the user computer and partly on a remote computer, or entirely on the remote computer or the server. In the case of the remote computer, the remote computer may be connected to the user computer through any kind of network, including a local area network (LAN) or a wide area network (WAN), or may be connected to an external computer (e.g., connected through the Internet with the aid of an Internet service provider).

The flowchart and the block diagram in the accompanying drawings illustrate the possibly implemented system architecture, functions, and operations of the system, the method, and the computer program product according to various embodiments of the present disclosure. In this regard, each block in the flowchart or the block diagram may represent a module, a program segment, or a part of code, and the module, the program segment, or the part of code contains one or more executable instructions for implementing specified logical functions. It should also be noted that, in some alternative implementations, the functions marked in the blocks may also occur in an order different from that marked in the accompanying drawings. For example, two consecutively-shown blocks may actually be executed in parallel basically, but sometimes may also be executed in a reverse order, depending on involved functions. It should also be noted that each block in the block diagrams and/or the flowcharts, and a combination of the blocks in the block diagrams and/or the flowcharts may be implemented using a dedicated hardware-based system that performs specified functions or operations, or may be implemented using a combination of dedicated hardware and computer instructions.

The involved units described in the embodiments of the present disclosure may be implemented through software or hardware. The name of the unit does not limit the unit itself in certain cases.

Herein, the functions described above may be at least partially executed by one or more hardware logic components. For example, without limitation, exemplary hardware logic components that can be used include: a field-programmable gate array (FPGA), an application specific integrated circuit (ASIC), an application specific standard product (ASSP), a system on chip (SOC), a complex programmable logic device (CPLD), etc.

In the context of the present disclosure, a machine-readable medium may be a tangible medium that may include or store a program for use by or for use in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the above content. More specific examples of the machine-readable storage medium may include an electrical connection based on one or more wires, a portable computer disk, a hard drive, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above content.

According to one or more embodiments of the present disclosure, Example 1 provides a video call method, including:
playing, in response to a first operation on a target interaction page, a standard video and a user video through the target interaction page, wherein the first operation is an operation of triggering a video interaction, the user video is an interactive video associated with the standard video, and the target interaction page is a page for displaying interaction content; and
generating an effect animation according to an action matching degree between the user video and the standard video, and displaying the effect animation through the target interaction page.

According to one or more embodiments of the present disclosure, Example 2 provides the method according to Example 1, where playing, in response to the first operation on the target interaction page, the standard video and the user video through the target interaction page includes:
acquiring the first operation on the target interaction page, and acquiring the standard video and the user video according to the first operation; and
playing the standard video through a first area on the target interaction page, and playing the user video through a second area on the target interaction page.

According to one or more embodiments of the present disclosure, Example 3 provides the method according to Example 1, where generating the effect animation according to the action matching degree between the user video and the standard video includes:
acquiring, in response to playing a preset pose in the standard video, at least one video frame associated with the preset pose in the user video;
matching a user pose in the at least one video frame with the preset pose, and determining the action matching degree according to a matching result; and
sending the action matching degree to a service end, acquiring effect information determined by the service end according to the action matching degree, and generating the effect animation according to the effect information.

According to one or more embodiments of the present disclosure, Example 4 provides the method according to Example 3, where acquiring, in response to playing the preset pose in the standard video, at least one video frame associated with the preset pose in the user video includes:
determining the preset pose being played in the standard video according to playback time of the standard video; and
acquiring a timestamp of a user pose in the user video corresponding to the preset pose, determining a timestamp interval according to the timestamp, and acquiring at least one video frame corresponding to the timestamp interval in the user video.

According to one or more embodiments of the present disclosure, Example 5 provides the method according to Example 3, where matching the user pose in the at least one video frame with the preset pose, and determining the action matching degree according to the matching result includes:
acquiring a first skeleton node corresponding to the user pose in each video frame;
matching a second skeleton node corresponding to the preset pose with the first skeleton node to obtain a similarity between the user pose in each video frame and the preset pose; and
determining the action matching degree according to the similarity.

According to one or more embodiments of the present disclosure, Example 6 provides the method according to Example 3, where after sending the action matching degree to the service end, the method further includes:
acquiring ranking information determined by the service end according to the action matching degree, and
where generating the effect animation according to the effect information comprises:
generating the effect animation according to the effect information and the ranking information.

According to one or more embodiments of the present disclosure, Example 7 provides the method according to Example 6, where generating the effect animation according to the effect information and the ranking information includes:
generating, for each preset pose, a first effect animation according to the effect information and the ranking information of each user, and generating a second effect animation according to the effect information of a local user.

According to one or more embodiments of the present disclosure, Example 8 provides the method according to Example 7, where displaying the effect animation through the target interaction page includes:
displaying the first effect animation through a third area on the target interaction page; and
displaying the second effect animation through a fourth area on the target interaction page.

According to one or more embodiments of the present disclosure, Example 9 provides the method according to Example 1, where before playing, in response to the first operation on the target interaction page, the standard video and the user video through the target interaction page, the method further includes:
establishing a communication connection with a video acquisition device through a set audio-video communication interface, and collecting the user video through the video acquisition device.

According to one or more embodiments of the present disclosure, Example 10 provides the method according to Example 1, where in response to a synchronization event being triggered, the method further includes:
sending a playback progress of the standard video and a user status to a service end through a set audio-video software development kit (SDK), and synchronizing the playback progress and the user status to the target interaction page of each user through the service end.

According to one or more embodiments of the present disclosure, Example 11 provides the method according to Example 1, further including:
displaying a video control through the target interaction page, and displaying, in response to a fourth operation on the video control, a video upload page; and
uploading, in response to a fifth operation on the video upload page, the standard video to a service end.

According to one or more embodiments of the present disclosure, Example 12 provides the method according to any one of Examples 1 to 11, further including:
acquiring, in response to a preset event being triggered, effect information and ranking information of each user in the effect animation; and
displaying a user identification, the effect information, and the ranking information of each user through a set pop-up.

According to one or more embodiments of the present disclosure, Example 13 provides a video call apparatus, including:
a video playback module, configured to play, in response to a first operation on a target interaction page, a standard video and a user video through the target interaction page, wherein the first operation is an operation of triggering a video interaction, the user video is an interactive video associated with the standard video, and the target interaction page is a page for displaying interaction content; and
an effect generation module, configured to generate an effect animation according to an action matching degree between the user video and the standard video, and display the effect animation through the target interaction page.

According to one or more embodiments of the present disclosure, Example 14 provides an electronic device, where the electronic device includes:
one or more processors; and
a storage means, configured to store one or more programs,
where the one or more programs, when executed by the one or more processors, cause the one or more processors to implement the video call method according to any of Examples 1 to 12.

According to one or more embodiments of the present disclosure, Example 15 provides a computer-readable storage medium, having a computer program stored therein, where the program, when executed by a processor, implements the video call method according to any of Examples 1 to 12.

What are described above are only preferred embodiments of the present disclosure and explanations of the technical principles applied. Those skilled in the art should understand that the scope of the disclosure involved in the present disclosure is not limited to the technical solutions formed by specific combinations of the above technical features, and shall also cover other technical solutions formed by any combination of the above technical features or equivalent features thereof without departing from the above concept of disclosure, such as a technical solution formed by replacing the above features with the technical features with similar functions disclosed (but not limited to) in the present disclosure.

Further, although the operations are described in a particular order, it should not be understood as requiring these operations to be performed in the shown particular order or in a sequential order. In certain environments, multitasking and parallel processing may be advantageous. Similarly, although several specific implementation details are included in the above discussion, these specific implementation details should not be interpreted as limitations on the scope of the present disclosure. Some features that are described in the context of separate embodiments may also be implemented in combination in a single embodiment. In contrast, various features described in the context of a single embodiment may also be implemented in a plurality of embodiments individually or in any suitable sub combination.

Although the subject matter has been described in a language specific to structural features and/or logic actions of the method, it should be understood that the subject matter defined in the appended claims is not necessarily limited to the specific features or actions described above. On the contrary, the specific features and the actions described above are merely example forms for implementing the claims.

## Claims

1. A video call method, comprising:
playing, in response to a first operation on a target interaction page, a standard video and a user video through the target interaction page, wherein the first operation is an operation of triggering a video interaction, the user video is an interactive video associated with the standard video, and the target interaction page is a page for displaying interaction content; and
generating an effect animation according to an action matching degree between the user video and the standard video, and displaying the effect animation through the target interaction page.

2. The method according to claim 1, wherein playing, in response to the first operation on the target interaction page, the standard video and the user video through the target interaction page comprises:
acquiring the first operation on the target interaction page, and acquiring the standard video and the user video according to the first operation; and
playing the standard video through a first area on the target interaction page, and playing the user video through a second area on the target interaction page.

3. The method according to claim 1, wherein generating the effect animation according to the action matching degree between the user video and the standard video comprises:
acquiring, in response to playing a preset pose in the standard video, at least one video frame associated with the preset pose in the user video;
matching a user pose in the at least one video frame with the preset pose, and determining the action matching degree according to a matching result; and
sending the action matching degree to a service end, acquiring effect information determined by the service end according to the action matching degree, and generating the effect animation according to the effect information.

4. The method according to claim 3, wherein acquiring, in response to playing the preset pose in the standard video, at least one video frame associated with the preset pose in the user video comprises:
determining the preset pose being played in the standard video according to playback time of the standard video; and
acquiring a timestamp of a user pose in the user video corresponding to the preset pose, determining a timestamp interval according to the timestamp, and acquiring at least one video frame corresponding to the timestamp interval in the user video.

5. The method according to claim 3, wherein matching the user pose in the at least one video frame with the preset pose, and determining the action matching degree according to the matching result comprises:
acquiring a first skeleton node corresponding to the user pose in each video frame;
matching a second skeleton node corresponding to the preset pose with the first skeleton node to obtain a similarity between the user pose in each video frame and the preset pose; and
determining the action matching degree according to the similarity.

6. The method according to claim 3, wherein after sending the action matching degree to the service end, the method further comprises:
acquiring ranking information determined by the service end according to the action matching degree, and
wherein generating the effect animation according to the effect information comprises:
generating the effect animation according to the effect information and the ranking information.

7. The method according to claim 6, wherein generating the effect animation according to the effect information and the ranking information comprises:
generating, for each preset pose, a first effect animation according to the effect information and the ranking information of each user, and generating a second effect animation according to the effect information of a local user.

8. The method according to claim 7, wherein displaying the effect animation through the target interaction page comprises:
displaying the first effect animation through a third area on the target interaction page; and
displaying the second effect animation through a fourth area on the target interaction page.

9. The method according to claim 1, wherein before playing, in response to the first operation on the target interaction page, the standard video and the user video through the target interaction page, the method further comprises:
establishing a communication connection with a video acquisition device through a set audio-video communication interface, and collecting the user video through the video acquisition device.

10. The method according to claim 1, wherein in response to a synchronization event being triggered, the method further comprises:
sending a playback progress of the standard video and a user status to a service end through a set audio-video software development kit (SDK), and synchronizing the playback progress and the user status to the target interaction page of each user through the service end.

11. The method according to claim 1, wherein before responding to a first operation on the target interaction page, the method further comprises:
displaying a video control through the target interaction page, and displaying, in response to a fourth operation on the video control, a video upload page; and
uploading, in response to a fifth operation on the video upload page, the standard video to a service end.

12. The method according to any of claims 1 to 11, further comprising:
acquiring, in response to a preset event being triggered, effect information and ranking information of each user in the effect animation; and
displaying a user identification, the effect information, and the ranking information of each user through a set pop-up.

13. A video call apparatus, comprising:
a video playback module, configured to play, in response to a first operation on a target interaction page, a standard video and a user video through the target interaction page, wherein the first operation is an operation of triggering a video interaction, the user video is an interactive video associated with the standard video, and the target interaction page is a page for displaying interaction content; and
an effect generation module, configured to generate an effect animation according to an action matching degree between the user video and the standard video, and display the effect animation through the target interaction page.

14. An electronic device, comprising:
one or more processors; and
a storage, configured to store one or more programs,
wherein the one or more programs, when executed by the one or more processors, cause the one or more processors to implement the video call method according to any of claims 1 to 12.

15. A storage medium comprising computer-executable instructions, wherein the computer-executable instructions, when executed by a computer processor, are configured to perform the video call method according to any of claims 1 to 12.
